# EUROPÄISCHE PATENTSCHRIFT

(11) **EP 1 491 295 B1**
(45) Veröffentlichungstag und Bekanntmachung des Hinweises auf die Patenterteilung: **20.09.2006**
(21) Anmeldenummer: 04014334.9
(22) Anmeldetag: 18.06.2004
(51) Int. Cl.: B25F 5/00, B25B 27/10, F16B 21/04

(54) **Verriegelungsbolzen zur Befestigung eines Werkzeuges an einem hydraulischen Verpressgerät**
Locking pin for fixing a tool member to a hydraulic pressing tool
Boulon pour la fixation d'un élément d'outil sur un outil de sertissage hydraulique

(30) Priorität: 27.06.2003 DE 10329007
(43) Veröffentlichungstag der Anmeldung: 29.12.2004
(73) Patentinhaber: Gustav Klauke GmbH, 42855 Remscheid (DE)
(72) Erfinder: Frenken, Egbert, Dr., 52525 Heinsberg (DE); Wilsdorf, Frank, 42929 Wermelskirchen (DE)
(74) Vertreter: Müller, Enno

(56) Entgegenhaltungen:
- DE-A- 10 110 882
- GB-A- 191 210 127
- US-A- 4 758 023

## Beschreibung

Die Erfindung betrifft zunächst einen Verriegelungsbolzen und eine Bolzen aufnahme zur Befestigung eines Werkzeuges in einem hydraulischen Pressgerät, wobei der Verriegelungsbolzen in der Bolzenaufnahme zwischen einer Verriegelungsstellung und einer Freigabestellung zu bewegen ist, mit einem Sicherungselement, das in der Bolzenaufnahme angeordnet ist und durch formschlüssigen Eingriff in den Verriegelungsbolzen die Verriegelungsstellung sichert, wobei weiter der Verriegelungsbolzen einen Sicherungsabschnitt aufweist und der Verriegelungsbolzen bei Einliegen des Sicherungselementes in dem Sicherungsabschnitt gegen eine Bewegung in die Freigabestellung gesichert ist.

Verriegelungsbolzen der in Rede stehenden Art sind bekannt und dienen bspw. zur Festlegung von Press-, Schneidwerkzeugen oder dergleichen in einem hydraulischen Pressgerät, welch letzteres elektrisch- oder auch handhebelbetätigbar ausgebildet sein kann. Zum schnellen Wechseln des anzuordnenden Werkzeuges ist ein derartiger Verriegelungsbolzen in Form eines Steckbolzens ausgebildet. Es wird auf die DE 10110 882 A1 verwiesen. Hieraus ist ein derartiger Verriegelungsbolzen bekannt, welcher einen koaxial zur Bolzenlängsachse ausgebildeten, ringnutartigen Sicherungsabschnitt aufweist. In diesen Sicherungsabschnitt tritt in Betriebsstellung ein in dem Aufnahmehals des Pressgerätes angeordnetes, federunterstütztes Sicherungselement ein. Durch Zug in Achsrichtung des Verriegelungsbolzens wird das Sicherungselement über eine Auflaufschräge des nutartigen Sicherungsabschnitts entgegen der Federkraft zurückverlagert, wonach der Verriegelungsbolzen aus der Betriebsstellung in eine Freigabestellung zum Wechsel des Werkzeuges verbracht werden kann. Diese Werkzeug-Freigabestellung des Verriegelungsbolzens ist gleichfalls durch eine weitere, endseitig, d. h. im Bereich des der Handhabe gegenüberliegenden Endes des Verriegelungsbolzens angeordnete Ringnut, in welche das Sicherungselement eintreten kann, gesichert. Zufolge dieser bekannten Ausgestaltung ist der Verriegelungsbolzen sowohl in der Werkzeug-Sicherungsstellung, als auch in der Werkzeug-Freigabestellung unverlierbar an dem Pressgerät, insbesondere im Bereich dessen Aufnahmehalses gesichert.

Im Hinblick auf den zuvor beschriebenen Stand der Technik wird eine technische Problematik der Erfindung darin gesehen, einen Verriegelungsbolzen der in Rede stehenden Art bei einfacher Handhabung hinsichtlich der Sicherung der Verriegelungsstellung weiter zu verbessern.

Diese Problematik ist durch den Gegenstand des Anspruchs 1 gelöst, wobei darauf abgestellt ist, dass der Verriegelungsbolzen eine Längsnut aufweist, dass der Sicherungsabschnitt mit einer Sicherungstiefe jedenfalls entsprechend einer Nuttiefe der Längsnut ausgebildet ist und dass der Sicherungsabschnitt in Umfangsrichtung in Nebeneinanderanordnung zu der Längsnut ausgebildet ist, bei unmittelbarem Übergang von einem Nutgrund in den Sicherungsabschnitt. Zufolge dieser erfindungsgemäßen Ausgestaltung ist ein Verriegelungsbolzen angegeben, welcher sich durch eine erhöhte Verriegelungssicherheit auszeichnet. So ist die Verriegelungsstellung durch Schiebeverlagerung des Verriegelungsbolzens entlang seiner Längsachse und abschließender Verdrehung des Verriegelungsbolzens erreichbar. Demzufolge ist zur Entriegelung des Verriegelungsbolzens zunächst zwingend eine Verdrehung des Verriegelungsbolzens in Umfangsrichtung erforderlich, um das Sicherungselement der Längsnut des Verriegelungsbolzens wieder zuzuordnen. Im Zuge der Längsverlagerung des Verriegelungsbolzens in die Verriegelungsstellung oder in die Freigabestellung ist der Verriegelungsbolzen durch Eingriff des Sicherungselementes in der Längsnut geführt und hierbei drehgesichert. In vorteilhafter Weise kann der dem Sicherungsabschnitt zugeordnete Endbereich der Längsnut mit einem Auslenkabschnitt für das Sicherungselement vorgesehen sein, welches bei einem Eindrücken des Verriegelungsbolzens in die Verriegelungsstellung das durch die Längsnut geführte Sicherungselement in den bezogen auf die Umfangsrichtung zur Längsnut benachbarten Sicherungsabschnitt drängt. Zufolge dessen wird durch Eindrükken des Verriegelungsbolzens die Sicherungsstellung automatisch erreicht. In einfachster Weise kann jedoch die Längsnut im Bereich des Sicherungsabschnittes im Grundriss L-förmig ausgebildet sein. Zur Erlangung der Sicherungsstellung ist eine willensbetonte Verdrehung des Verriegelungsbolzens in Umfangsrichtung erforderlich, wodurch dem Sicherungselement der Sicherungsabschnitt zugeordnet wird. Der Nutgrund der Längsnut geht bei dieser erfindungsgemäßen Ausgestaltung stufenlos in den Grund des Sicherungsabschnitts über, wobei weiter das Sicherungselement als starres, d. h. insbesondere nicht entlang dessen Längsachse bewegliches Element, bspw. in Form einer Madenschraube oder dergleichen gebildet sein kann. Dieses Sicherungselement ist im Übrigen bevorzugt im Bereich eines Gabelschenkels eines gabelförmigen Aufnahmehalses des Pressgerätes angeordnet und ragt hierbei in eine, den Verriegelungsbolzen führende Bohrung ein. Die Längsnut des Verriegelungsbolzens ist weiter bevorzugt endseitig, d. h. im Bereich des dem Sicherungsabschnitt gegenüberliegenden Ende geschlossen, endet somit mit Abstand zum freien Endbereich des Verriegelungsbolzens. Zufolge dieser Ausgestaltung ist der Verriegelungsbolzen durch stetigen Eingriff des Sicherungselements in der Längsnut bzw. in dem Sicherungsabschnitt unverlierbar am Pressgerät gehalten. Weiter ist bevorzugt, die Längsnut auf der Unterseite des Verriegelungsbolzens auszubilden. Betrieblich treten hier nur Druckspannungen auf. Das Sicherungselement ist dementsprechend gleichfalls unterhalb des Verriegelungsbolzens platziert.

Die Erfindung betrifft weiter einen Verriegelungsbolzen nach dem Oberbegriff des Anspruchs 1 oder nach Anspruch 1, wobei zur weiteren Verbesserung der Verriegelungsstellung vorgeschlagen wird, dass der Verriegelungsbolzen eine Längsnut aufweist und dass der Sicherungsabschnitt stufenmäßig versetzt zu einem Nutgrund ausgebildet ist. Zufolge dieser Ausgestaltung ist ein Verriegungsbolzen geschaffen, welcher sich bei einfacher Handhabung durch eine erhöhte Sicherung der Verriegelungsstellung auszeichnet. Der Verriegelungsbolzen ist hierbei durch Eingriff des Sicherungselementes in die Längsnut des Verriegelungsbolzens stets geführt und zumindest im Verlagerungsweg drehgesichert. Die Sicherungsstellung ist erreicht, wenn das durch die Längsnut geführte Sicherungselement den Sicherungsabschnitt des Verriegelungsbolzens erreicht, wobei bedingt durch die gegenüber dem Nutgrund größere Tiefe des Sicherungsabschnitt-Grunds das Sicherungselement in den Sicherungsabschnitt abfällt, wobei bevorzugt ein hörbares Klicken zu vernehmen ist. Nach Erreichen des Sicherungsabschnittes kann das Sicherungselement nur willensbetont wieder durch Anheben desselben auf das Niveau des Nutgrundes in die Längsnut verlagert werden, wonach der Verriegelungsbolzen wieder zur Verlagerung desselben freigegeben ist. Der stufenmäßig versetzt zum Nutgrund ausgebildete Sicherungsabschnitt kann hierbei in unmittelbarem Übergang zur Längsnut ausgebildet sein. Alternativ kann der stufenmäßig versetzte Sicherungsabschnitt auch in Umfangsrichtung in Nebeneinanderanordnung zu der Längsnut ausgebildet sein.

Die weiteren Merkmale sind sowohl für sich als auch in Kombination mit dem Gegenstand des Anspruchs 1 als auch in Kombination mit dem Gegenstand des Anspruchs 2 wesentlich. So wird weiter vorgeschlagen, dass das Sicherungselement gegen Federkraft verlagerbar ist. Diese Ausgestaltung erweist sich insbesondere bei einer stufenmäßig versetzten Anordnung des Sicherungsabschnittes gegenüber dem Nutgrund als vorteilhaft. Als insbesondere handhabungstechnisch vorteilhaft erweist sich eine Ausbildung, bei welcher der Sicherungsabschnitt mit einer Auflaufschräge ausgebildet ist zur Bewegung des Sicherungselements in eine Sicherungselement-Freigabestellung, aus welcher heraus die Verlagerung des Verriegelungsbolzens in eine Werkzeugentnahme-/Wechselstellung erfolgen kann. Die Auflaufschräge ist hierbei in Umfangsrichtung und/oder Axialrichtung des Verriegelungsbolzens ausgebildet, wobei weiter zur Lenkung des Sicherungselements auf die Auflaufschräge eine Verdrehung des Verriegelungsbolzens in Umfangsrichtung erforderlich ist, um hierbei das Sicherungselement aus dem tieferen Sicherungsabschnittgrund auf den stufenmäßig versetzt höherliegenden Nutgrund der Längsnut zu verlagern. Hierbei kann weiter der Sicherungsabschnitt in Verlängerung der Längsnut angeordnet sein und die Auflaufschräge in einem hierzu benachbarten Bereich des Sicherungsabschnittes ausgeformt sein. So wird weiter vorgeschlagen, dass die Auflaufschräge in Umfangsrichtung in einen Rückführabschnitt übergeht, welch letzterer weiter bevorzugt in Umfangsrichtung bezüglich der Längsnut gegensinnig zu dem Sicherungsabschnitt angeordnet ist. Auch kann vorgesehen sein, dass der Rückführabschnitt in Nutlängsrichtung teilweise überlappend zu dem zugeordneten Längsnut-Endbereich ausgebildet ist. Zur weiteren Vereinfachung der Handhabung wird vorgeschlagen, dass der Verriegelungsbolzen in seine Öffnungsstellung federvorgespannt ist. Dem entsprechend stützt sich das Sicherungselement in der Sicherungsstellung des Verriegelungsbolzens bedingt durch die federbelastete Beaufschlagung des Verriegelungsbolzens in Richtung auf die Öffnungsstellung in dem Sperrabschnitt des Sicherungsabschnittes ab, welcher Sperrabschnitt die Stufe zwischen Längsnut und Sicherungsabschnitt oder auch ein zur Längsnut benachbarter Wandungsbereich des Sicherungsabschnittes sein kann. Durch diese Federbelastung ist die Verriegelungsstellung weiter gegen ungewolltes Entriegeln gesichert. Auch ist bei einer Nebeneinanderanordnung von Längsnut und Sicherungsabschnitt eine Zwangsdrehung des Verriegelungsbolzens zum Einschwenken des Sicherungsabschnitts in den Bereich des Sicherungselementes durch Anordnung einer auf den Sicherungsbolzen einwirkenden Torsionsfeder oder dergleichen erreichbar, so dass der Verriegelungsbolzens drehend vorgespannt ist, mit einer Drehkraft in Richtung des Sicherungsabschnittes. Zur Bewegung des Verriegelungsbolzens aus der Verriegelungsstellung in die Freigabestellung ist bevorzugt eine Bewegung in Richtung der Verriegelungsstellung erforderlich, um hiernach über eine Drehbewegung des Verriegelungsbolzens in Umfangsrichtung das Sicherungselement über den Rückführabschnitt wieder in die Längsnut zu führen. Eine weitere Erhöhung der Sicherung der Verriegelungsstellung ist dadurch gegeben, dass das Sicherungselement in der Verriegelungsstellung in Umfangsrichtung von der Längsnut durch eine Verriegelungsnase getrennt ist. Durch diese Maßnahme ist der Verriegelungsbolzen in der Verriegelungsstellung durch den gewählten Hintergriff zumindest in eine Richtung verdrehgesichert, welche Verdrehsicherung erst durch eine Bewegung des Verriegelungsbolzens in Richtung der Verriegelungsstellung und anschließender Verdrehung in Umfangsrichtung aufhebbar ist. Der Sicherungsabschnitt weist bevorzugt eine in Längsrichtung der Längsnut ausgebildete Rastvertiefung auf, die in Umfangsrichtung in den gegenüber der Rastvertiefung in Verriegelungsrichtung des Verriegelungsbolzens vorgelagerten Sicherungsabschnitt übergeht. Auch kann vorgesehen sein, dass die Auflaufschräge, gegebenenfalls zusammen mit dem Rückführabschnitt die Rastvertiefung umgibt, so bspw. zur Ausbildung einer spiralförmigen Rampe zur Rückführung des Sicherungselements in die Längsnut. Schließlich wird vorgeschlagen, dass der Rückführabschnitt jedenfalls im Übergangsbereich zu der Nut stufenartig überhöht ist. Somit ist sichergestellt, dass im Zuge der Verriegelung das Sicherungselement den Sicherungsabschnitt findet und hier einrastet. Ein unbeabsichtigtes seitliches Ausweichen des Sicherungselements auf den Rückführabschnitt durch versehentliches Drehen beim Einschieben des Verriegelungsbolzens wird hierdurch vermieden.

Nachstehend ist die Erfindung anhand der beigefügten Zeichnungen, welche lediglich mehrere Ausführungsbeispiele darstellen, näher erläutert. Es zeigt:
- Fig. 1: eine partiell geschnittene Seitenansicht eines Pressgeräte-Aufnahmehalses mit einem Verriegelungsbolzen in der gesicherten Verriegelungsstellung;
- Fig. 2: die Draufsicht zu der Darstellung in Fig. 1, wobei ein partieller Schnitt durch den Sicherungsbereich des Verriegelungsbolzens gelegt ist;
- Fig. 3: den Verriegelungsbolzen in einer ersten Ausführungsform in perspektivischer Darstellung, eine Zwischenstellung im Zuge der Verriegelung desselben betreffend;
- Fig. 4: eine Ansichtsdarstellung des Verriegelungsbolzens mit Blick auf eine Längsnut und einen Sicherungsabschnitt sowie ein in der Längsnut geführtes Sicherungselement, die Zwischenstellung gemäß Fig. 3 betreffend;
- Fig. 5: eine gegenüber der Darstellung in Fig. 4 um 90° um die Längsachse des Verriegelungsbolzens gedrehte Darstellung, partiell im Bereich des Eingriffs des Sicherungselementes in den Sicherungsabschnitt in geschnittener Darstellung;
- Fig. 6: den Schnitt gemäß der Linie VI-VI in Fig. 5,
- Fig. 7: eine weitere perspektivische Darstellung des Verriegelungsbolzens, die gesicherte Raststellung desselben betreffend;
- Fig. 8: eine der Fig. 4 entsprechende Darstellung, jedoch die Stellung des Verriegelungsbolzens gemäß Fig. 7 betreffend;
- Fig. 9: eine der Fig. 6 entsprechende Schnittdarstellung, jedoch die Stellung gemäß den Fig. 7 und 8 betreffend;
- Fig. 10: den Verriegelungsbolzen in perspektivischer Darstellung, eine Zwischenstellung im Zuge des Verriegelungsvorganges betreffend;
- Fig. 11: die Ansicht hierzu;
- Fig. 12: eine der Fig. 9 entsprechende Schnittdarstellung, jedoch die Zwischenstellung gemäß den Fig. 10 und 11 betreffend;
- Fig. 13: eine weitere Schnittdarstellung gemäß Fig. 9, jedoch die Entriegelungsstellung betreffend;
- Fig. 14: eine perspektivische Darstellung des Verriegelungsbolzens in einer zweiten Ausführungsform, die Verriegelungsstellung betreffend;
- Fig. 15: die Ansichtsdarstellung hierzu;
- Fig. 16: eine um 90° um die Längsachse des Verriegelungsbolzens gedrehte, partiell geschnittene Darstellung;
- Fig. 17: den Verriegelungsbolzen in perspektivischer Darstellung, eine Zwischenstellung im Zuge der Entriegelung betreffend;
- Fig. 18: eine der Fig. 15 entsprechende Darstellung, jedoch die Zwischenstellung gemäß Fig. 17 betreffend;
- Fig. 19: eine Folgedarstellung der Fig. 17;
- Fig. 20: die Ansichtsdarstellung zu Fig. 19;
- Fig. 21: eine Folgedarstellung der Fig. 19;
- Fig. 22: die entsprechende Ansichtsdarstellung hierzu;
- Fig. 23: eine der Fig. 16 entsprechende Darstellung, jedoch die Zwischenstellung gemäß den Fig. 21 und 22 betreffend;
- Fig. 24: eine perspektivische Darstellung eines Verriegelungsbolzens in einer dritten Ausführungsform, die Verriegelungsstellung betreffend;
- Fig. 25: die Ansichtsdarstellung zu Fig. 24;
- Fig. 26: eine partiell geschnittene Ansichtsdarstellung gemäß Fig. 23, jedoch die Ausführungsform gemäß der Fig. 24 und 25 betreffend;
- Fig. 27: den Schnitt gemäß der Linie XXVII-XXVII in Fig. 26;
- Fig. 28: eine perspektivische Darstellung des Verriegelungsbolzens gemäß Fig. 24, jedoch in einer Zwischenstellung im Zuge des Entriegelungsvorganges;
- Fig. 29: die Ansichtsdarstellung hierzu;
- Fig. 30: eine Folgedarstellung der Fig. 28;
- Fig. 31: die Ansichtsdarstellung zu Fig. 30;
- Fig. 32: eine der Fig. 26 entsprechende Darstellung, jedoch die Zwischenstellung gemäß Fig. 30 betreffend;
- Fig. 33: den Schnitt gemäß der Linie XXXIII-XXXIII in Fig. 32;
- Fig. 34: eine Folgedarstellung der Fig. 30;
- Fig. 35: die Ansichtsdarstellung hierzu;
- Fig. 36: eine Querschnittsdarstellung gemäß Fig. 33, jedoch die Stellung gemäß den Fig. 34 und 35 betreffend;
- Fig. 37: eine perspektivische Darstellung eines Verriegelungsbolzens in der Verriegelungsstellung, eine weitere Ausführungsform betreffend;
- Fig. 38: die Ansichtsdarstellung zu Fig. 37 mit Blick auf die Längsnut;
- Fig. 39: eine partiell geschnittene Ansichtsdarstellung gemäß Fig. 32, jedoch die Ausführungsform gemäß Fig. 35 betreffend;
- Fig. 40: den Schnitt gemäß der Linie XL-XL in Fig. 39;
- Fig. 41: eine perspektivische Darstellung gemäß Fig. 37, jedoch eine Zwischenstellung im Zuge des Entriegelungsvorganges betreffend;
- Fig. 42: die Ansichtsdarstellung hierzu;
- Fig. 43: eine Querschnittsdarstellung gemäß Fig. 40, jedoch die Zwischenstellung gemäß den Fig. 41 und 42 betreffend;
- Fig. 44: eine Folgedarstellung der Fig. 41;
- Fig. 45: die Ansichtsdarstellung hierzu;
- Fig. 46: eine der Fig. 43 entsprechende Querschnittsdarstellung, jedoch die Zwischenstellung gemäß den Fig. 44 und 45 betreffend;
- Fig. 47: eine Folgedarstellung der Fig. 44;
- Fig. 48: die Ansichtsdarstellung hierzu;

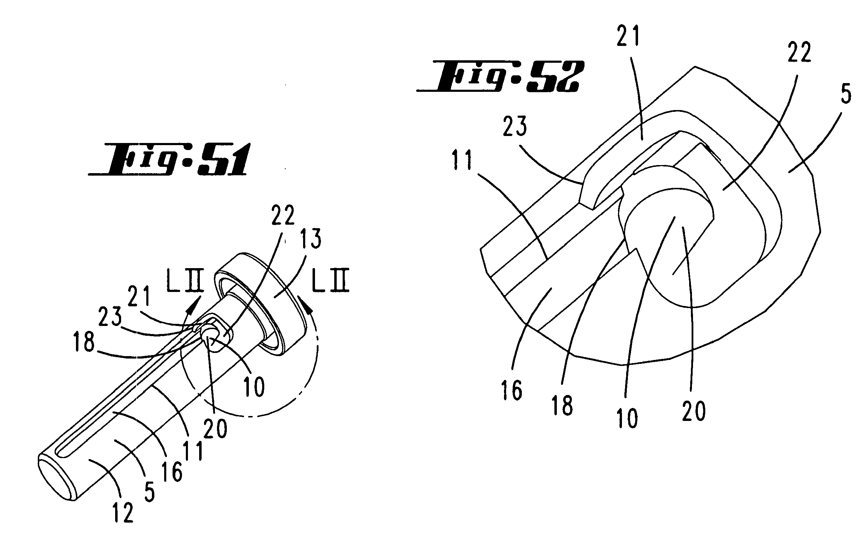

- Fig. 49: eine der Fig. 39 entsprechende Darstellung, jedoch die Zwischenstellung gemäß den Fig. 47 und 48 entsprechend;
- Fig. 50: den Querschnitt gemäß der Linie L-L in Fig. 49;
- Fig. 51: in perspektivischer Darstellung einen Verriegelungsbolzen in einer weiteren Ausführungsform;
- Fig. 52: eine Herausvergrößerung des Bereichs LII in Fig. 51.

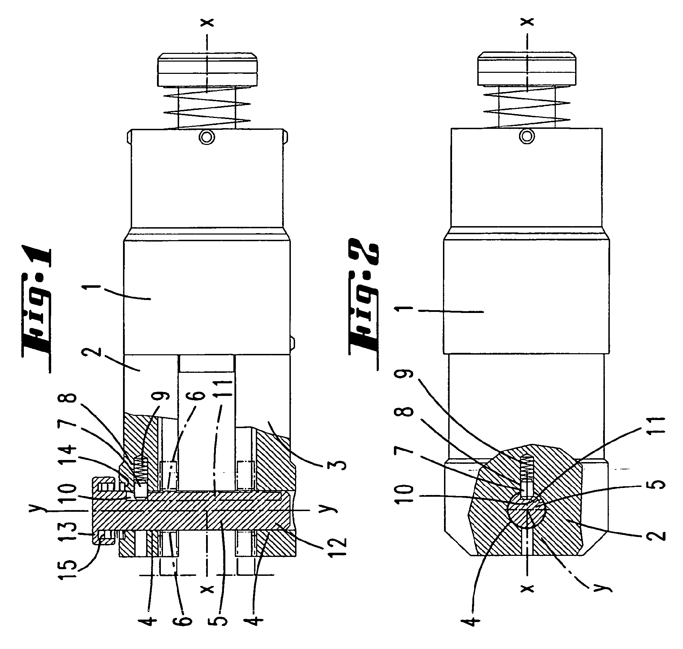

Die Figuren 1 und 2 zeigen einen Aufnahmehals 1 eines nicht dargestellten elektrisch betätigbaren, hydraulischen Pressgeräts. Der Aufnahmehals 1 ist in üblicher Weise gabelförmig ausgestaltet, mit einer quer zur Halserstreckung die Gabelschenkel 2, 3 durchsetzenden Bolzenaufnahme 4 in Form einer Durchgangsbohrung. In dieser Bolzenaufnahme 4 ist ein Verriegelungsbolzen 5 gehaltert.

Der Aufnahmehals 1 dient zur Festlegung eines an das Pressgerät zu befestigenden Werkzeugs, so bspw. zum Verpressen. Das Werkzeug ist in den Zeichnungen nicht dargestellt.

Das Werkzeug ist auswechselbar an dem Pressgerät bzw. an dessen Aufnahmehals 1 festlegbar, so dass auch andere Werkzeuge, wie bspw. Schneidwerkzeuge, anordbar sind.

Wie insbesondere aus der Teilschnittdarstellung in Fig. 1 zu erkennen, durchsetzt der Verriegelungsbolzen 5 in der Verriegelungsstellung die Bolzenaufnahme 4 des betätigungsseitigen Gabelschenkels 2 und werkzeugseitig ausgeformte Bohrungen 6 und taucht endseitig in die Bolzenaufnahme 4 des anderen Gabelschenkels 3 zur Verriegelung des Werkzeugs ein.

Der Verriegelungsbolzen 5 ist entlang seiner quer zur Aufnahmehals-Achse x verlaufenden Verriegelungsbolzen-Achse y aus einer Verriegelungsstellung gemäß den Fig. 1 und 2 in eine Freigabestellung und umgekehrt verlagerbar, wobei sowohl die Freigabestellung als auch die Verriegelungsstellung mittels eines Sicherungselements 7 gesichert ist.

Das Sicherungselement 7 ist in einer quer zur Verriegelungsbolzen-Achse y ausgerichteten, die Bolzenaufnahme 4 durchquerenden Bohrung 8 im Bereich des einen Gabelschenkels 2 verlagerbar aufgenommen. Die Anordnung ist hierbei weiter so gewählt, dass das Sicherungselement 7 in dem, dem freien Ende des Aufnahmehalses 1 abgewandten Abschnitt der Bohrung 8, rückwärtig abgestützt über eine Druckfeder 9 einliegt und somit über die Druckfeder 9 in Richtung auf den Verriegelungsbolzen 5 einwirkt.

Zur Verriegelung des Verriegelungsbolzens liegt das stiftartige Sicherungselement 7 in einem mantelseitig des Verriegelungsbolzens 5 ausgeformten Sicherungsabschnitt 10 ein, welch letzterer zur Verlagerung des Verriegelungsbolzens 5 in eine Werkzeug-Freigabestellung in eine mantelwandseitig offene Längsnut 11 übergeht. Im Zuge der Öffnungsverlagerung des Verriegelungsbolzens 5 wird das ortsfeste Sicherungselement 7 durch die Längsnut 11 geführt, die endseitig beabstandet zum freien Ende 12 des Verriegelungsbolzens 5 endet und somit in Zusammenwirkung mit dem Sicherungselement 7 einen Anschlag in der Entriegelungsstellung bildet. Der Verriegelungsbolzen 5 ist zufolge dessen unverlierbar am Aufnahmehals 1 gehaltert.

Der Verriegelungsbolzen 5 ist in Öffnungsrichtung, d. h. in Richtung auf die Werkzeug-Freigabestellung federvorgespannt, wozu der Verriegelungsbolzen 5 im Bereich eines von außen zugänglichen Handhabungskopfes 13 unterseitig durch eine sich in einer zugeordneten, zum Verriegelungsbolzen 5 koaxialen Vertiefung 14 einliegenden Druckfeder 15 beaufschlagt wird.

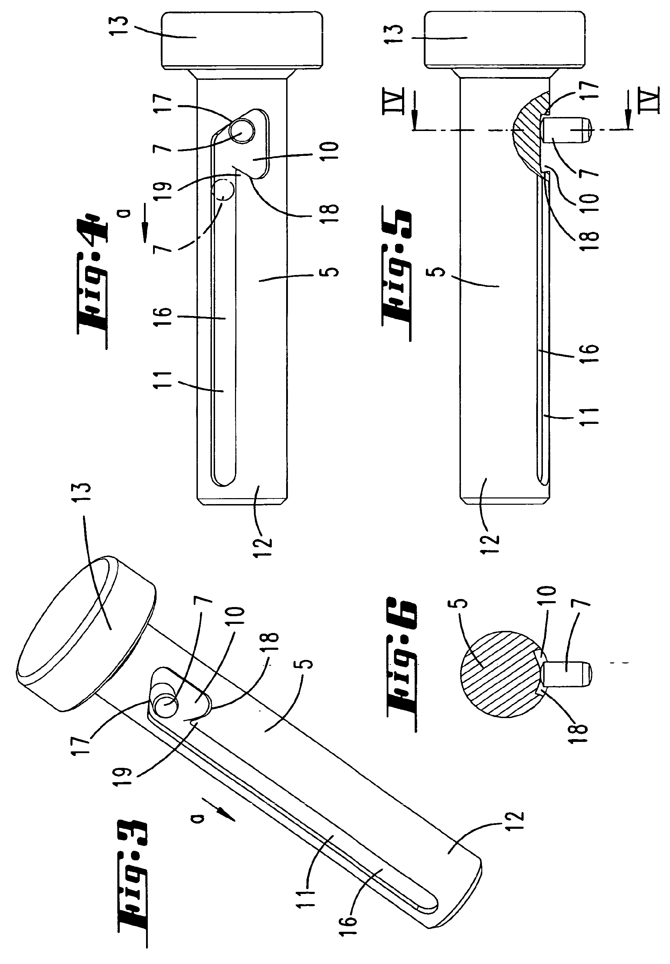

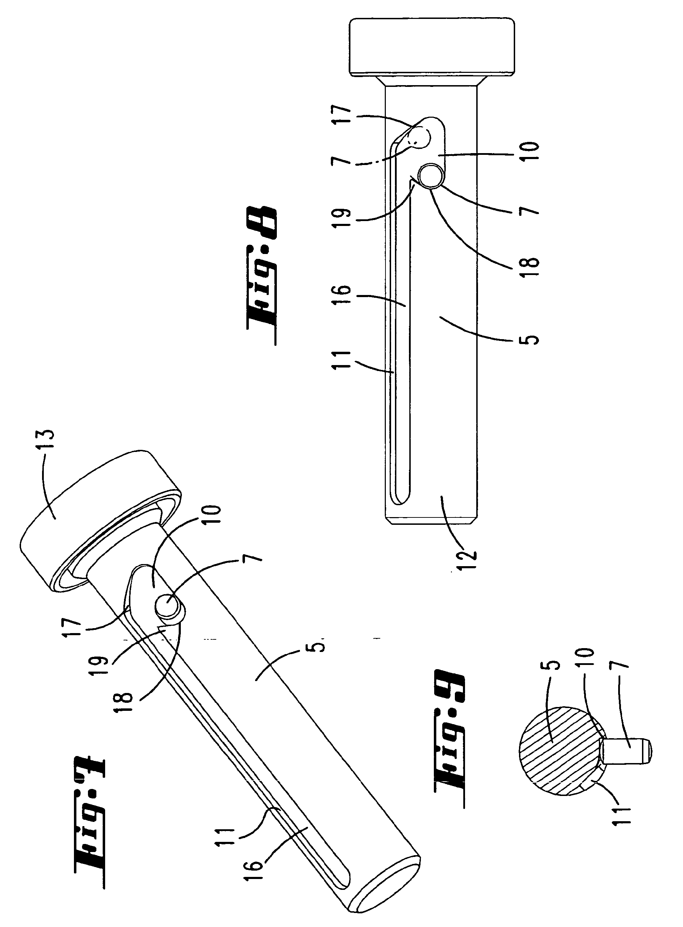

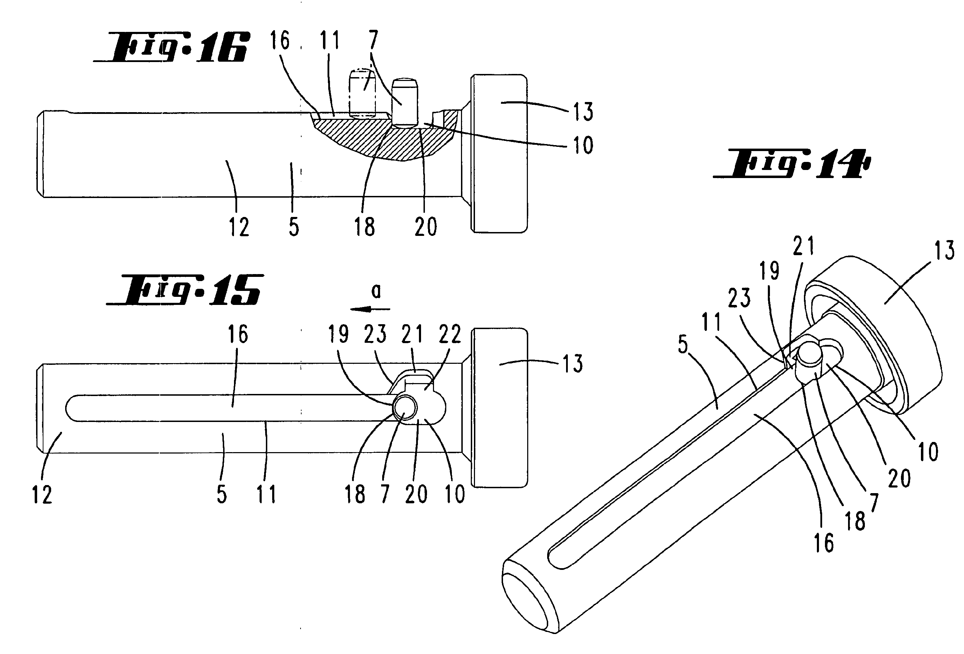

Die Fig. 3 bis 13 zeigen eine erste Ausführungsform des Verriegelungsbolzens 5. Zur besseren Veranschaulichung sind in den Zeichnungen dieser Ausführungsform und auch in denen der weiteren Ausführungsbeispiele lediglich die miteinander wirkenden Verriegelungsbolzen 5 und Sicherungselemente 7 gezeigt. Die jeweilige lokale Anordnung dieser beiden Elemente ergibt sich aus den Fig. 1 und 2.

In der ersten Ausführungsform ist der Sicherungsabschnitt 10 in Umfangsrichtung des Verriegelungsbolzens 5 in Nebeneinanderanordnung zur Längsnut 11 ausgebildet, dies bei unmittelbarem Übergang von einem Nutgrund 16 in den Sicherungsabschnitt 10. Die Sicherungstiefe des Sicherungsabschnitts 10 entspricht der Nuttiefe der Längsnut 11.

Demzufolge geht die Längsnut 11 in dem, dem Bolzenende 12 gegenüberliegenden Endbereich unmittelbar in den Sicherungsabschnitt 10 über. Die dem Handhabungskopf 13 zugewandte Stirnfläche 17 der Längsnut 11 erstreckt sich in einem stumpfen Winkel zu den Längsrandkanten der Längsnut 11 zur Bildung einer Steuerfläche. Bei Längsverlagerung des Verriegelungsbolzens 5 in Richtung auf die Verriegelungsstellung (Pfeil a gibt die Einschub-Verriegelungsrichtung an), tritt diese Steuer-Stirnfläche 17 der Längsnut 11 gegen das ortsfeste, zapfenartige Sicherungselement 7, was bei weiterer Einschubbewegung des Verriegelungsbolzens 5 eine Drehung desselben veranlasst, so dass der Sicherungsabschnitt 10 in den Wirkbereich des Sicherungselements 7 eingedreht wird. In dieser Stellung liegt das Ende 12 des Verriegelungsbolzens 5 bereits in der Bolzenaufnahme 4 des gegenüberliegenden Gabelschenkels 3 ein.

Nach Loslassen des Verriegelungsbolzens 5 wird dieser aufgrund der unterseitig diesen beaufschlagenden Druckfeder 15 wieder entgegen der Einschub-Verriegelungsrichtung a zurückverlagert bis eine Sperrfläche 18 des zur Längsnut 11 benachbarten Sicherungsabschnitts 10 gegen das Sicherungselement 7 tritt. Der Verriegelungsbolzen 5 ist nunmehr in der Verriegelungsstellung gesichert. Diese Sicherungsstellung wird noch weiter dadurch unterstützt, dass das Sicherungselement 7 in Umfangsrichtung von der Längsnut 11 durch eine Verriegelungsnase 19 getrennt ist, welch letztere in Druckfeder-Beaufschlagungsrichtung, d. h. in Richtung des Handhabungskopfes 13 weist und somit den Hintergriff zur Längsnut 11 bildet. Zufolge der Ausformung der Verriegelungsnase 19 ist die gesicherte Verriegelung nicht durch einfaches, insbesondere unbeabsichtigtes Rückdrehen des Verriegelungsbolzens 5, was ein Wiederauffinden der Längsnut 11 durch das Sicherungselement zur Folge hätte, aufhebbar.

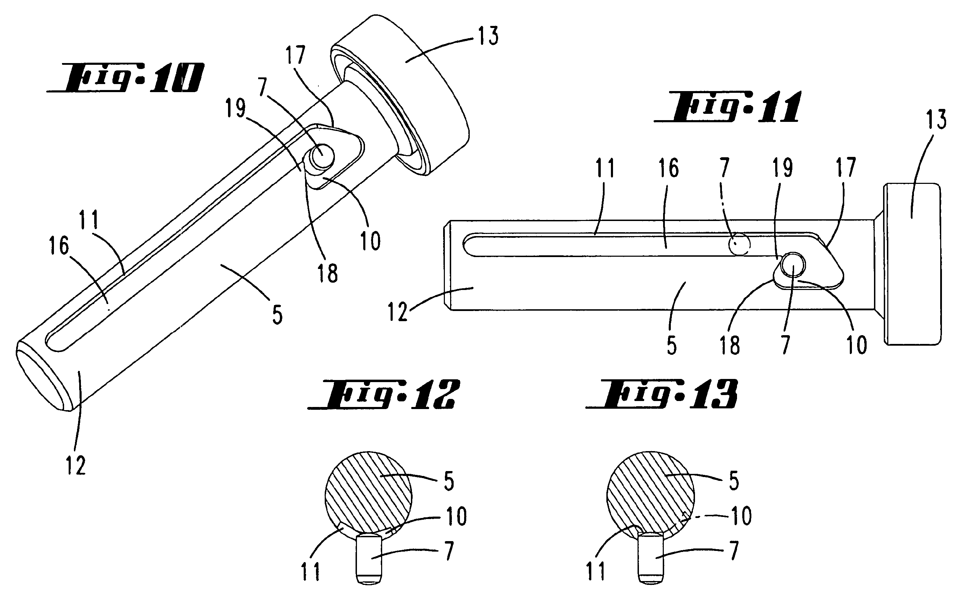

Vielmehr ist, wie die Fig. 10 bis 13 zeigen, ein willensbetontes, da die Kraft der Druckfeder 15 überwindendes Drehen des Verriegelungsbolzens 5 in Umfangsrichtung nötig, um hierdurch die Verriegelungsnase 19 an dem Sicherungselement 7 vorbeizuführen und abschließend die Längsnut 11 wieder in Zuordnung zu dem Sicherungselement 7 zu verbringen. Hiernach ist der Verriegelungsbolzens 5 zur Freigabe des Werkzeuges rückziehbar bis in eine durch das Nutende vordefinierte Anschlagstellung.

Bei dieser ersten Ausführungsform kann das Sicherungselement 7 als fester Stift, d. h. ohne rückwärtige Abfederung ausgebildet sein.

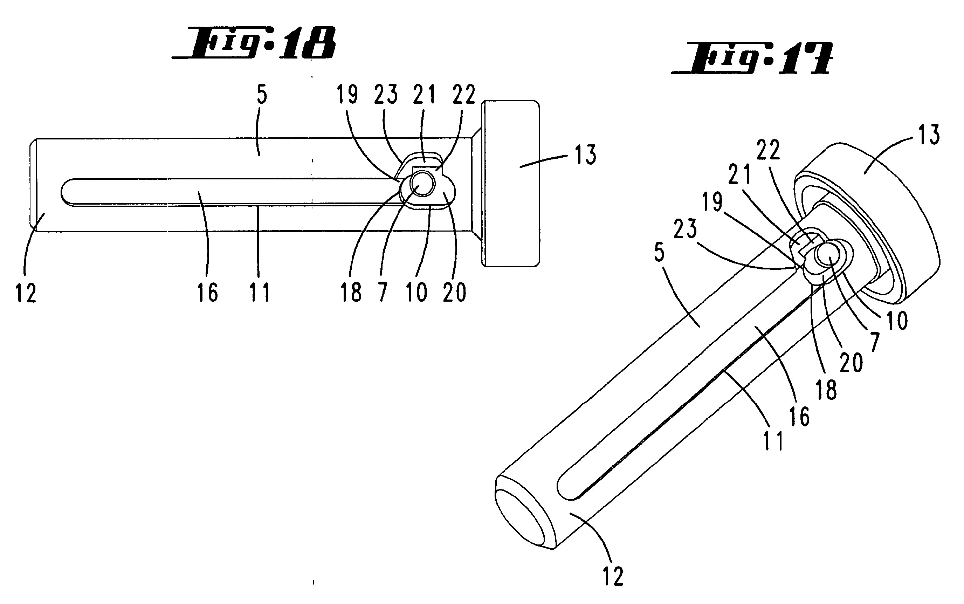

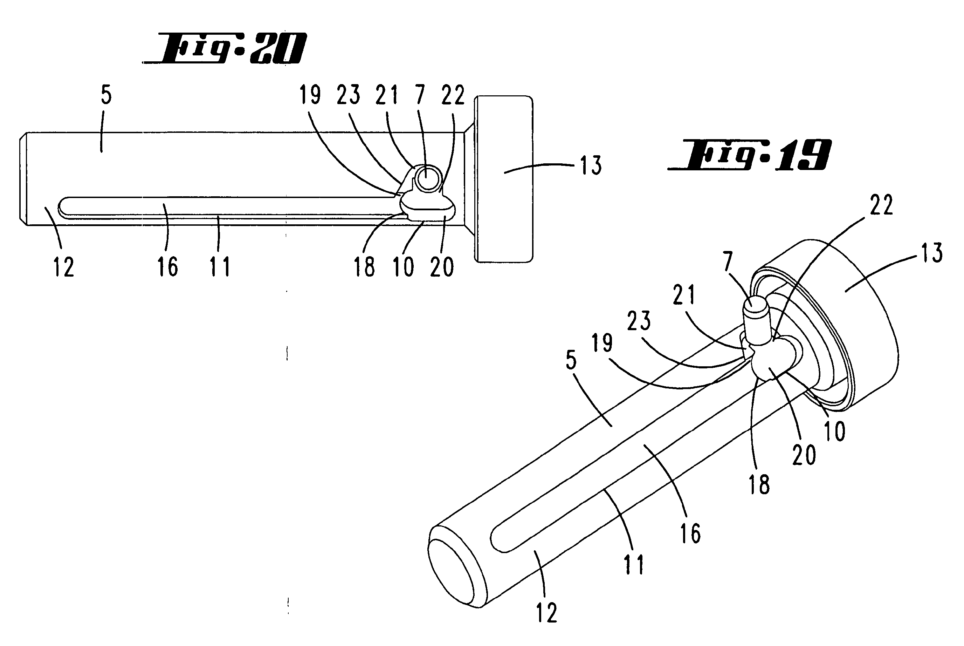

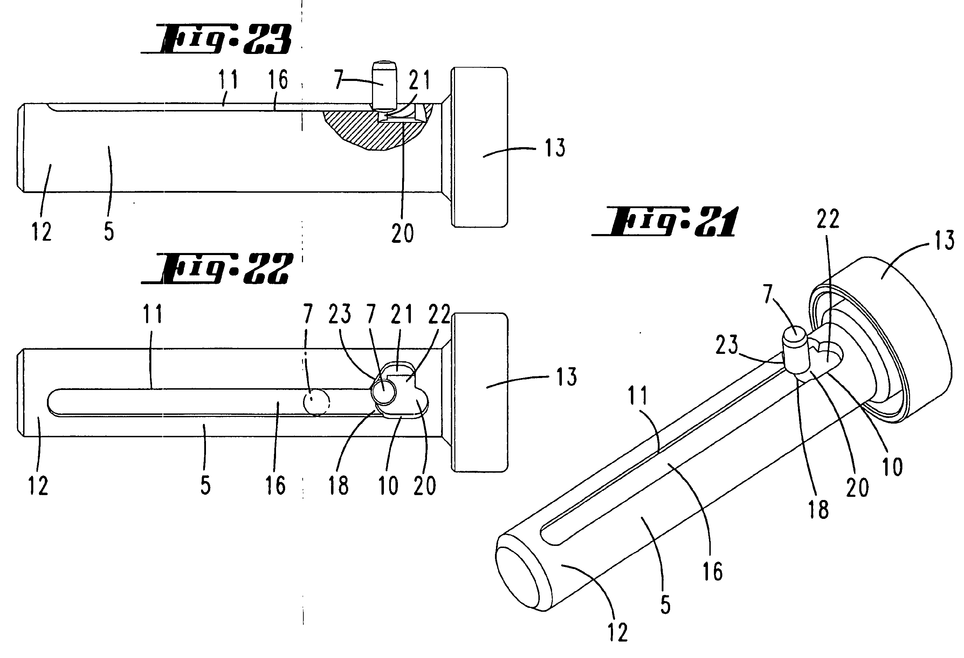

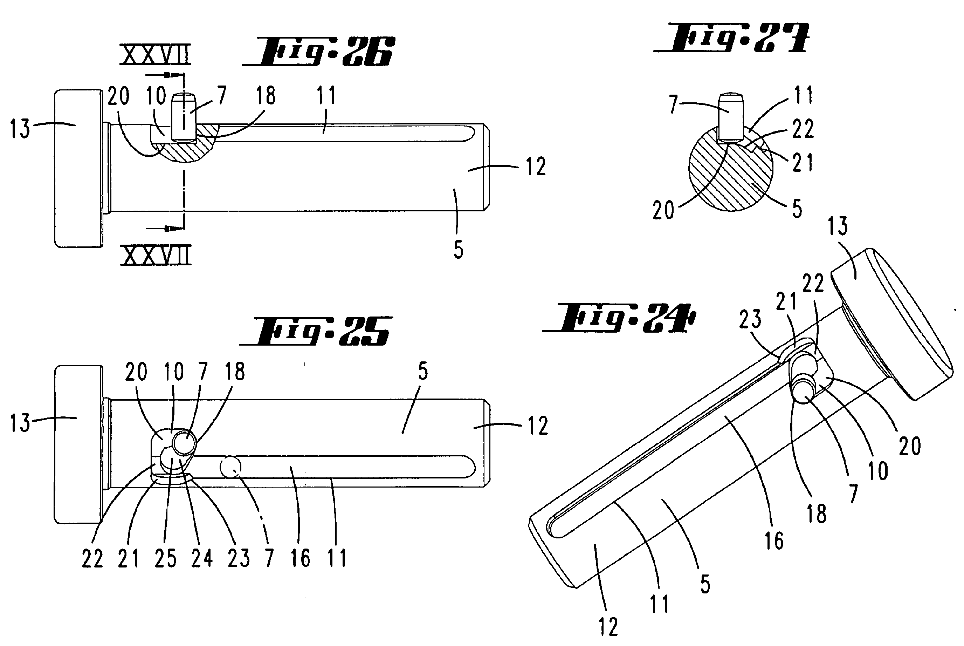

Die Fig. 14 bis 23 zeigen eine zweite Ausführungsform des erfindungsgemäßen Verriegelungsbolzens 5. Ein wesentlicher Unterschied zu dem zuvor beschriebenen Ausführungsbeispiel besteht darin, dass hier der Sicherungsabschnitt 10 stufenmäßig versetzt zu dem Nutgrund 16 ausgebildet ist, so dass im Zuge des Verriegelungsvorganges, d. h. bei Verlagerung des Verriegelungsbolzens 5 in Einschub-Verriegelungsrichtung a das durch die Längsnut 11 geführte Sicherungselement 7 endseitig in den Sicherungsabschnitt 10 -bedingt durch die rückwärtige Beaufschlagung mittels der Druckfeder 9- abfällt und sich hierbei verriegelnd vor eine im Bereich der Stufe ausgeformte Sperrfläche 18 legt.

Der Sicherungsabschnitt-Grund 20 entspricht in dem dargestellten Ausführungsbeispiel etwa der doppelten Nutgrundtiefe.

Weiter ist in dem dargestellten zweiten Ausführungsbeispiel der Sicherungsabschnitt 10 in Verlängerung der Längsnut 11 angeordnet. Ein neben dem Sicherungsabschnitt 10 ausgeformter weiterer Abschnitt dient der Rückführung des Sicherungselements 7 auf das Niveau des Nutgrundes 16. Dieser Rückführabschnitt 21 ist in Nutlängsrichtung teilweise überlappend zu dem zugeordneten Längsnut-Endbereich, welcher in den Sicherungsabschnitt 10 übergeht, ausgebildet.

Vom Sicherungsabschnitt-Grund 20 ausgehend, führt in Umfangsrichtung sich erstreckend eine Auflaufschräge 22, welche im Rückführabschnitt 21 mündet.

Zur gesicherten Verriegelung des Verriegelungsbolzens 5 wird dieser in üblicher Weise in Einschub-Verriegelungsrichtung a bewegt, bis das Sicherungselement 7 hinter der Sperrfläche 18 in den Sicherungsabschnitt 10 einfällt. Nach Loslassen des Verriegelungsbolzens 5 stützt sich dieser mit seiner Sperrfläche 18 an dem Sicherungselement 7 ab, wobei durch eine kreisabschnittförmige Grundriss-Ausgestaltung der Sperrfläche 18 eine Verriegelungsnase 19 ausgeformt ist, die ein unbeabsichtigtes Verdrehen des Verriegelungsbolzens 5 unterbindet.

Die Entriegelung ist nur willensbetont möglich, indem der Verriegelungsbolzen 5 in Umfangsrichtung gedreht wird, wobei zunächst durch die Abstützung der Verriegelungsnase 19 an dem Sicherungselement 7 eine Linearverlagerung des Verriegelungsbolzens 5 entgegen der Öffnungsrichtung, d. h. in Einschub-Verriegelungsrichtung a durchgeführt wird, wonach die Auflaufschräge 22 dem Sicherungselement 7 zugeordnet ist. Durch die willensbetonte Drehung des Verriegelungsbolzens 5 wird das Sicherungselement 7 entgegen der Kraft der dieses rückwärtig beaufschlagenden Druckfeder 9 über die Auflaufschräge 22 auf das Niveau des Rückführabschnittes 21 verlagert.

Aus dieser nicht mehr rastgesicherten Stellung heraus bewirkt die den Verriegelungsbolzens 5 beaufschlagende Druckfeder 15 zunächst eine Linearverlagerung in Öffnungsrichtung bis eine Rückführschräge 23 des Rückführabschnittes 21 sich am Sicherungselement 7 abstützend eine Rückdrehung des Verriegelungsbolzens 5 bewirkt, wonach abschließend die Längsnut 11 das Sicherungselement 7 wieder erfasst. Hiernach wird der Verriegelungsbolzen 5 druckfederbeaufschlagt linear in die Freigabestellung verlagert.

Zufolge dieser Ausgestaltung wird durch willensbetontes Drehen des Verriegelungsbolzens 5 im übertragenen Sinne das Verriegelungselement 7 aus dem niveautieferen Sicherungsabschnitt 10 über die Auflaufschräge 22 und den Rückführabschnitt 21 zurück auf die niveauhöhere Längsnut 11 verbracht.

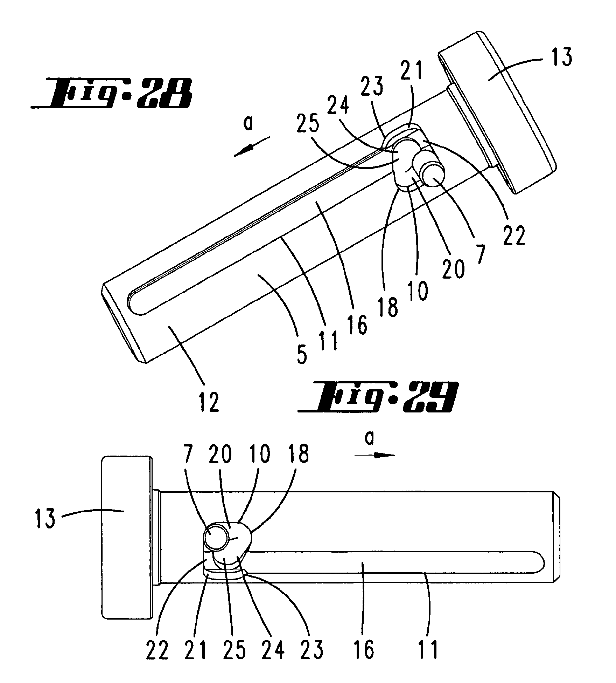

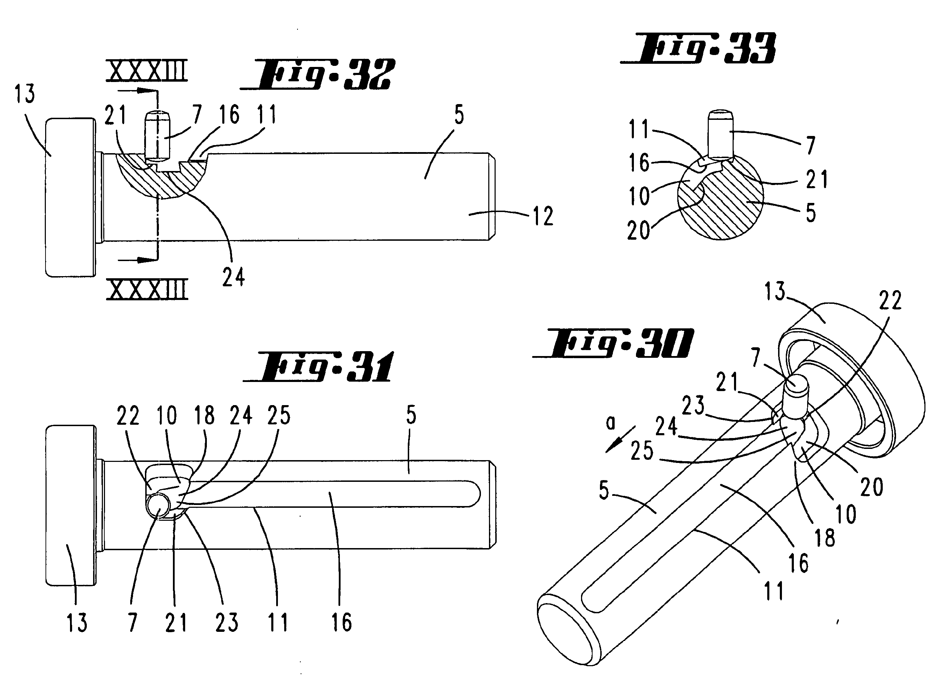

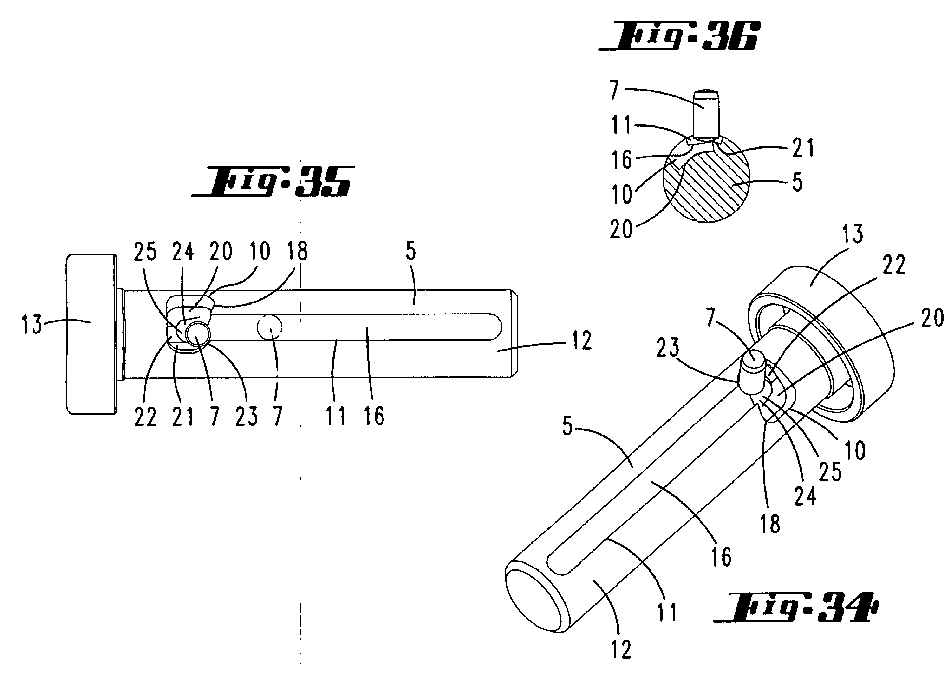

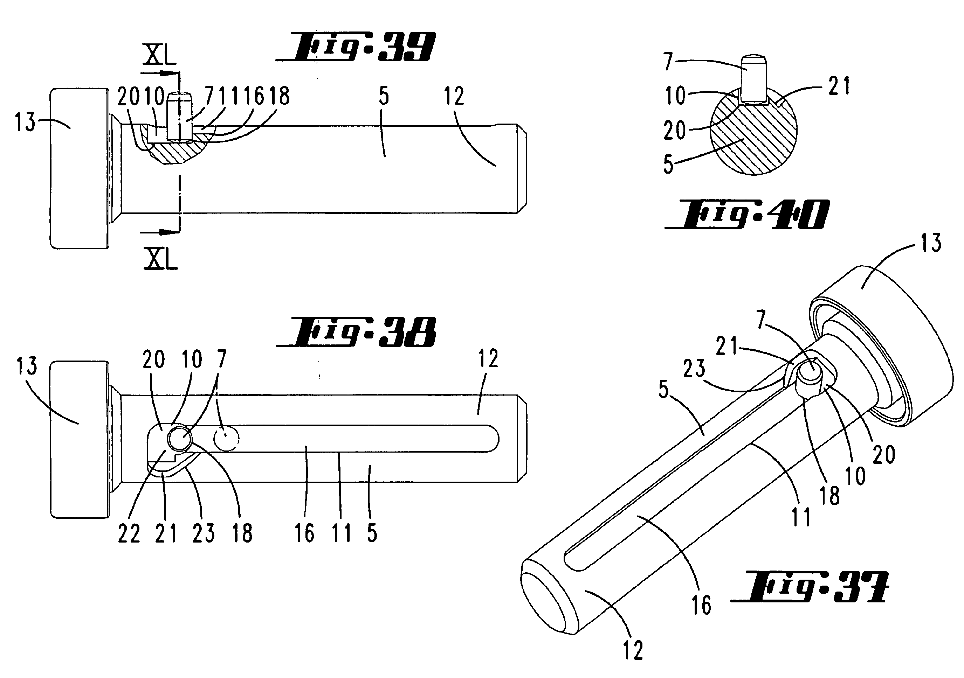

Die Fig. 24 bis 36 zeigen eine dritte Ausführungsform des Verriegelungsbolzens 5. Auch in dieser Variante ist im Übergang von der Längsnut 11 zum Sicherungsabschnitt 10 eine Stufe vorgesehen, so dass der Sicherungsabschnitt-Grund 20 ein tieferes Niveau aufweist als der Nutgrund 16. Dieser niveautiefere Abschnitt ist entgegen dem zuvor beschriebenen Ausführungsbeispiel lediglich als Rastvertiefung 24 ausgeformt, dem der eigentliche Sicherungsabschnitt 10 benachbart ist. Zufolge dieser Ausgestaltung ist der Sicherungsabschnitt 10 in Umfangsrichtung in Nebeneinanderanordnung zur Längsnut 11 bzw. zu einer gedachten Verlängerung derselben angeordnet.

Das im Zuge der Verriegelung in die Rastvertiefung 24 federunterstützt einfallende Sicherungselement 7 wird im Bereich der Rastvertiefung 24 über eine Ablaufschräge 25 in den Sicherungsabschnitt 10 abgelenkt, was durch die ortsfeste Lagerung des Sicherungselements 7 eine selbsttätige Drehung des Verriegelungsbolzens 5 nach Einfangen des Sicherungselements 7 im Sicherungsabschnitt 10 zur Folge hat. Der Verriegelungsbolzens 5 findet zufolge dessen selbsttätig die gesicherte Verriegelungsstellung. In dieser stützt sich der Verriegelungsbolzen 5 mittels der Sperrfläche 18 des Sicherungsabschnittes 10 an dem Sicherungselement 7 ab.

Zur Entriegelung ist das Eindrücken des Verriegelungsbolzens 5 in Einschub-Verriegelungsrichtung a und ein nachfolgendes Drehen des Verriegelungsbolzens 5 in Umfangsrichtung desselben nötig, um hierdurch das Sicherungselement 7 wieder auf dem niveauhöheren Nutgrund 16 zu verbringen. Durch die stufenartige Rastvertiefung 24 führt der Versuch eines lediglichen Drehens des Verriegelungsbolzens 5 aus der Verriegelungsstellung heraus nicht zur Aufhebung der gesicherten Verriegelungsstellung.

Durch Eindrücken des Verriegelungsbolzens 5 in Einschub-Verriegelungsrichtung a wird eine Auflaufschräge 22 in den Wirkungsbereich des Sicherungselements 7 verbracht, über welche Auflaufschräge 22 das Sicherungselement 7 auf den Rückführabschnitt 21 verbracht wird, über welchen die Zuführung zur Längsnut 11 erfolgt.

Wie aus den Darstellungen zu erkennen, umgeben hierbei die Auflaufschräge 22 und der Rückführabschnitt 21 die Rastvertiefung 24 spiralartig, wobei weiter die Auflaufschräge 22 dem, dem Handhabungsknopf 13 zugewandten Bereich des Sicherungsabschnittes 10 zugeordnet ist und weiter der Rückführabschnitt 21 in Umfangsrichtung bezüglich der Längsnut 11 gegensinnig zu dem Sicherungsabschnitt 10 angeordnet ist.

Bezogen auf die Ansichtsdarstellungen in den Fig. 25, 29, 31 und 35 vollzieht das Sicherungselement 7 aus der Verriegelungsstellung gemäß Fig. 25 heraus eine relative spiralförmige Bewegungsbahn um die Rastvertiefung 24. Sicherungsabschnitt 10, Auflaufschräge 22 und Rückführabschnitt 21 wirken zufolge dieser Ausgestaltung kulissenartig.

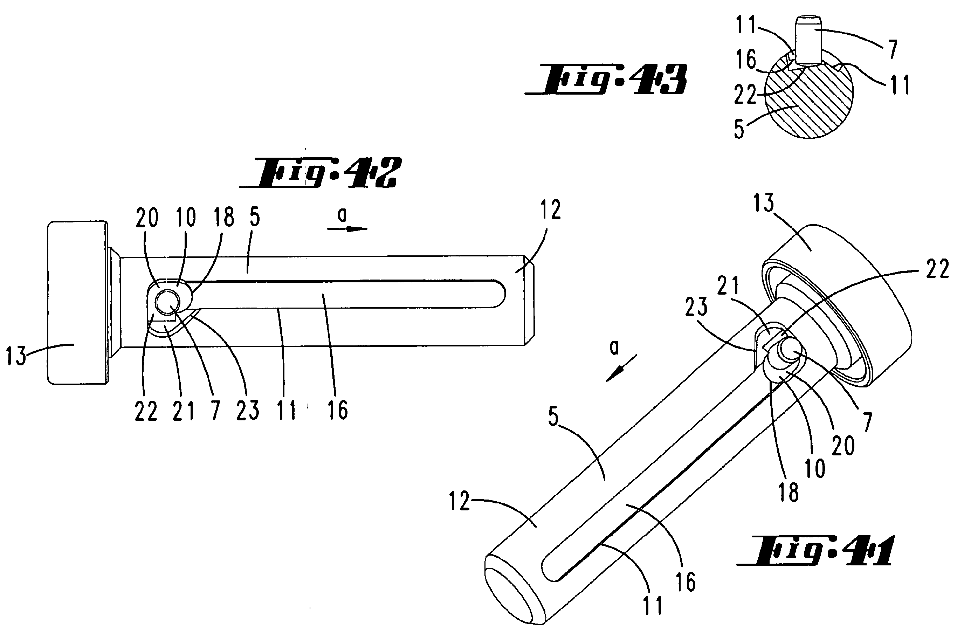

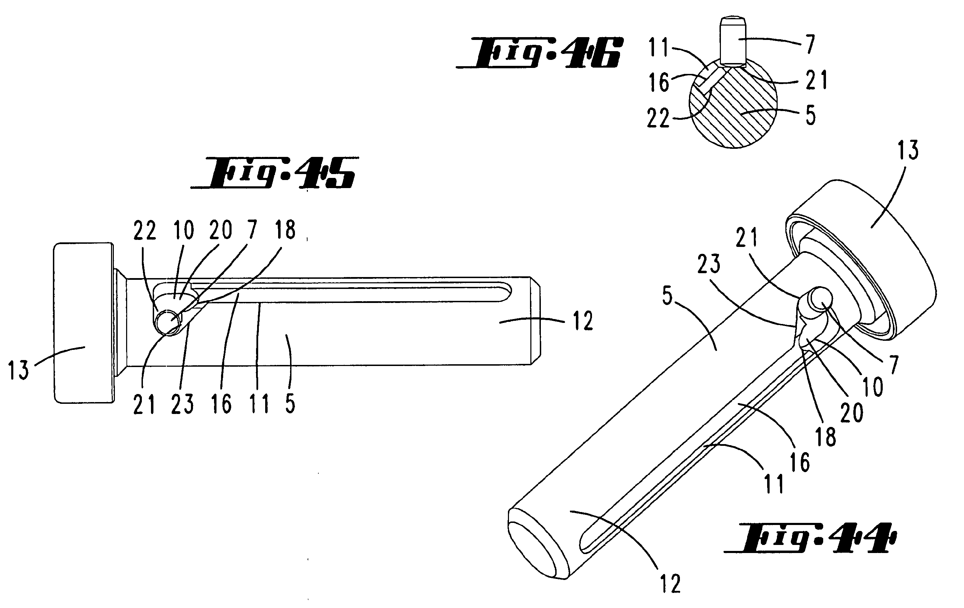

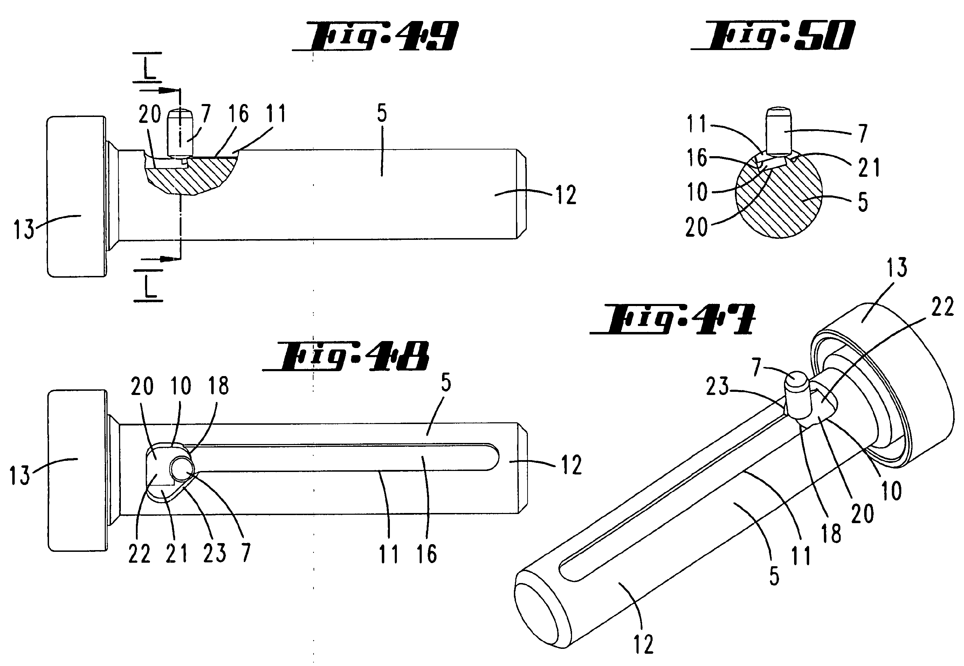

In den Fig. 37 bis 48 ist eine weitere Ausführungsform gezeigt, bei welcher der Sicherungsabschnitt 10 in Verlängerung der Längsnut 11 stufenartig versetzt angeordnet ist. Durch Eindrücken des Verriegelungsbolzens 5 wird die gesicherte Verriegelungsstellung selbsttätig eingenommen, indem die, die Stufe zwischen Längsnut 11 und Sicherungsabschnitt 10 bildende Sperrfläche 18 sich gegen das Sicherungselement 7 abstützt.

Die Aufhebung dieser Verriegelungsstellung erfolgt durch Drücken des Verriegelungsbolzens in Einschub-Verriegelungsrichtung a und anschließendem Verdrehen des Verriegelungsbolzens 5 in Umfangsrichtung, so dass über eine in Umfangsrichtung sich erstreckende Auflaufschräge 22 und einen sich hieran anschließenden, in Nebeneinanderanordnung zu dem Sicherungsabschnitt 10 angeordneten Rückführabschnitt 21 das höherliegende Niveau des Nutgrundes 16 erreicht werden kann, wobei, wie auch bei den zuvor beschriebenen Ausführungsbeispielen, das Sicherungselement 7 federnd in die Bohrung 8 einfährt. Auch bei dieser Ausführungsform ist der Rückführabschnitt 21 in Nutlängsrichtung teilweise überlappend zu dem zugeordneten Längsnut-Endbereich ausgebildet.

Nach Eindrücken des Verriegelungsbolzens 5 und Verdrehen desselben ist die gesicherte Verriegelung bereits aufgehoben, so dass die den Verriegelungsbolzen 5 unterstützende Druckfeder 15 die Verlagerung des Verriegelungsbolzens 5 in die Freigabestellung veranlasst, dies, bedingt durch die in Richtung auf die Längsnut 11 weisende Rückführschräge 23 des Rückführabschnittes 21, unter gleichzeitiger Rückdrehung des Verriegelungsbolzens 5 in die Schwenkgrundstellung, in welcher das Sicherungselement 7 in der Längsnut 11 aufgenommen ist.

Schließlich zeigen die Fig. 51 und 52 eine weitere Version, welche in wesentlichen Teilen der vorbeschriebenen Ausführungsform gemäß den Fig. 24 bis 36 entspricht. In dieser Ausführungsform ist lediglich -wie insbesondere aus der Vergrößerungsdarstellung in Fig. 52 zu erkennen- der Rückführabschnitt 21 jedenfalls im Übergangsbereich zur Längsnut 11 stufenartig überhöht, so dass nach Überlaufen des Rückführabschnittes 21 das Sicherungselement 7 federunterstützt sicher in die Längsnut 11 einfällt. Darüber hinaus ist durch diese Ausgestaltung ein unbeabsichtigtes seitliches Ausweichen des Sicherungselementes 7 auf den Rückführabschnitt 21 durch versehentliches Drehen beim Einschieben des Verriegelungsbolzens 5 zur Festlegung eines Werkzeuges vermieden. Vielmehr ist vor Erreichen der Sicherungsstellung, in welcher das Sicherungselement 7 die Längsnut 11 verlassend in den Sicherungsabschnitt 10 eingreift, kein Verdrehen des Verriegelungsbolzens 5 um dessen Längsachse möglich.

## Patentansprüche

1. Verriegelungsbolzen (5) und Bolzenaufnahme (4) zur Befestigung eines Werkzeuges in einem hydraulischen Pressgerät, wobei der Verriegelungsbolzen (5) in der Bolzenaufnahme (4) zwischen einer Verriegelungsstellung und einer Freigabestellung zu bewegen ist, mit einem Sicherungselement (7), das in der Bolzenaufnahme (4) angeordnet ist und durch formschlüssigen Eingriff in den Verriegelungsbolzen (5) die Verriegelungsstellung sichert, wobei weiter der Verriegelungsbolzen (5) einen Sicherungsabschnitt (10) aufweist und der Verriegelungsbolzen (5) bei Einliegen des Sicherungselements (7) in dem Sicherungsabschnitt (10) gegen eine Bewegung in die Freigabestellung gesichert ist, **dadurch gekennzeichnet, dass** der Verriegelungsbolzen (5) eine Längsnut (11) aufweist, dass der Sicherungsabschnitt (10) mit einer Sicherungstiefe jedenfalls entsprechend einer Nuttiefe der Längsnut (11) ausgebildet ist und dass der Sicherungsabschnitt (10) in Umfangsrichtung in Nebeneinanderanordnung zu der Längsnut (11) ausgebildet ist, bei unmittelbarem Übergang von einem Nutgrund (16) in den Sicherungsabschnitt (10).

2. Verriegelungsbolzen und Bolzenaufnahme nach dem Oberbegriff des Anspruchs oder nach Anspruch 1, **dadurch gekennzeichnet, dass** der Verriegelungsbolzen (5) eine Längsnut (11) aufweist und dass der Sicherungsabschnitt (10) stufenmäßig versetzt zu einem Nutgrund (16) ausgebildet ist.

3. Verriegelungsbolzen und Bolzenaufnahme nach einem der vorhergehenden Ansprüche, **dadurch gekennzeichnet, dass** das Sicherungselement (7) gegen Federkraft verlagerbar ist.

4. Verriegelungsbolzen und Bolzenaufnahme nach einem der Ansprüche 1 bis 3, **dadurch gekennzeichnet, dass** der Sicherungsabschnitt (10) mit einer Auflaufschräge (22) ausgebildet ist zur Bewegung des Sicherungselements (7) in eine Sicherungselement-Freigabestellung.

5. Verriegelungsbolzen und Bolzenaufnahme nach Anspruch 4, **dadurch gekennzeichnet, dass** die Auflaufschräge (22) in Umfangsrichtung und/oder Axialrichtung des Verriegelungsbolzens (5) ausgebildet ist.

6. Verriegelungsbolzen und Bolzenaufnahme nach Anspruch 5, **dadurch gekennzeichnet, dass** die Auflaufschräge (22) in Umfangsrichtung in einen Rückführabschnitt (21) übergeht.

7. Verriegelungsbolzen und Bolzenaufnahme nach Anspruch 6, **dadurch gekennzeichnet, dass** der Rückführabschnitt (21) in Umfangsrichtung bezüglich der Längsnut (11) gegensinnig zu dem Sicherungsabschnitt (10) angeordnet ist.

8. Verriegelungsbolzen und Bolzenaufnahme nach einem der Ansprüche 6 oder 7, **dadurch gekennzeichnet, dass** der Rückführabschnitt (21) in Nutlängsrichtung teilweise überlappend zu dem zugeordneten Längsnut-Endbereich ausgebildet ist.

9. Verriegelungsbolzen und Bolzenaufnahme nach einem der Ansprüche 1 bis 8, **dadurch gekennzeichnet, dass** der Verriegelungsbolzen (5) in seine Öffnungsstellung federvorgespannt ist.

10. Verriegelungsbolzen und Bolzenaufnahme nach Anspruch 9, **dadurch gekennzeichnet, dass** der Verriegelungsbolzen (5) drehend vorgespannt ist, mit einer Drehkraft in Richtung des Sicherungsabschnitts (10).

11. Verriegelungsbolzen und Bolzenaufnahme nach einem der Ansprüche 1 bis 10, **dadurch gekennzeichnet, dass** zur Bewegung des Verriegelungsbolzens (5) aus der Verriegelungsstellung in die Freigabestellung zunächst eine Bewegung (Pfeil a) in Richtung der Verriegelungsstellung erforderlich ist.

12. Verriegelungsbolzen und Bolzenaufnahme nach einem der Ansprüche 1 bis 11, **dadurch gekennzeichnet, dass** das Sicherungselement (7) in der Verriegelungsstellung in Umfangsrichtung von der Längsnut (11) durch eine Verriegelungsnase (19) getrennt ist.

13. Verriegelungsbolzen und Bolzenaufnahme nach einem der Ansprüche 1 bis 12, **dadurch gekennzeichnet, dass** der Sicherungsabschnitt (10) eine in Längsrichtung der Längsnut (11) ausgebildete Rastvertiefung (24) aufweist, die in Umfangsrichtung in dem gegenüber der Rastvertiefung (24) in Verriegelungsrichtung (Pfeil a) des Verriegelungsbolzens (5) vorgelagerten Sicherungsabschnitt (10) übergeht.

14. Verriegelungsbolzen und Bolzenaufnahme nach einem der Ansprüche 4 bis 13, **dadurch gekennzeichnet, dass** die Auflaufschräge (22), gegebenenfalls zusammen mit dem Rückführabschnitt (21) die Rastvertiefung (24) umgibt.

15. Verriegelungsbolzen und Bolzenaufnahme nach einem der Ansprüche 6 bis 14, **dadurch gekennzeichnet, dass** der Rückführabschnitt (21) jedenfalls im Übergangsbereich zur Längsnut (11) stufenartig überhöht ist.

## Claims

1. Locking bolt (5) and bolt receptacle (4) for mounting a tool in a hydraulic press, it being possible for the locking bolt (5) to move in the bolt receptacle (4) between a locking position and a release position, with a securing element (7), which is disposed in the bolt receptacle (4) and secures the locking position by positive engagement in the locking bolt (5), the locking bolt (5) also having a securing portion (10), and the locking bolt (5) being secured against movement into the release position when the securing element (7) is lying in the securing portion (10), **characterized in that** the locking bolt (5) has a longitudinal groove (11), **in that** the securing portion (10) is formed with a securing depth in any event corresponding to a groove depth of the longitudinal groove (11) and **in that** the securing portion (10) is formed such that it is adjacent to the longitudinal groove (11) in the circumferential direction, with a direct transition from a groove base (16) into the securing portion (10).

2. Locking bolt and bolt receptacle according to the precharacterizing clause of Claim 1 or according to Claim 1, **characterized in that** the locking bolt (5) has a longitudinal groove (11) and **in that** the securing portion (10) is formed such that it is offset in a step-like manner in relation to a groove base (16).

3. Locking bolt and bolt receptacle according to one of the preceding claims, **characterized in that** the securing element (7) can be displaced against spring force.

4. Locking bolt and bolt receptacle according to one of Claims 1 to 3, **characterized in that** the securing portion (10) is formed with a run-up slope (22) for the movement of the securing element (7) into a securing element release position.

5. Locking bolt and bolt receptacle according to Claim 4, **characterized in that** the run-up slope (22) is formed in the circumferential direction and/or axial direction of the locking bolt (5).

6. Locking bolt and bolt receptacle according to Claim 5, **characterized in that** the run-up slope (22) goes over in the circumferential direction into a returning portion (21).

7. Locking bolt and bolt receptacle according to Claim 6, **characterized in that** the returning portion (21) is disposed oppositely in the circumferential direction with respect to the longitudinal groove (11) than the securing portion (10).

8. Locking bolt and bolt receptacle according to one of Claims 6 or 7, **characterized in that** the returning portion (21) is formed such that it partly overlaps in the longitudinal direction of the groove with the associated end region of the longitudinal groove.

9. Locking bolt and bolt receptacle according to one of Claims 1 to 8, **characterized in that** the locking bolt (5) is spring-biased into its opening position.

10. Locking bolt and bolt receptacle according to Claim 9, **characterized in that** the locking bolt (5) is biased in a rotating manner, with a rotating force in the direction of the securing portion (10).

11. Locking bolt and bolt receptacle according to one of Claims 1 to 10, **characterized in that**, for movement of the locking bolt (5) out of the locking position into the release position, first a movement (arrow a) in the direction of the locking position is required.

12. Locking bolt and bolt receptacle according to one of Claims 1 to 11, **characterized in that**, in the locking position, the securing element (7) is circumferentially separated from the longitudinal groove (11) by a locking lug (19).

13. Locking bolt and bolt receptacle according to one of Claims 1 to 12, **characterized in that** the securing portion (10) has a detent depression (24), which is formed in the longitudinal direction of the longitudinal groove (11) and goes over in the circumferential direction into the securing portion (10), which is disposed ahead of the detent depression (24) in the locking direction (arrow a) of the locking bolt (5).

14. Locking bolt and bolt receptacle according to one of Claims 4 to 13, **characterized in that** the run-up slope (22), possibly together with the returning portion (21), surrounds the detent depression (24).

15. Locking bolt and bolt receptacle according to one of Claims 6 to 14, **characterized in that** the returning portion (21) is in any event superelevated in a step-like manner in the transitional region to the longitudinal groove (11).

## Revendications

1. Boulon de verrouillage (5) et logement de boulon (4) pour la fixation d'un outil dans une presse hydraulique, le boulon de verrouillage (5) devant être déplacé dans le logement de boulon (4) entre une position de verrouillage et une position de libération, comportant un élément de blocage (7) qui est disposé dans le logement de boulon (4) et bloque au moyen d'un engagement positif la position de verrouillage dans le boulon de verrouillage (5), le boulon de verrouillage (5) présentant en outre une section de blocage (10) et le boulon de verrouillage (5) étant bloqué par introduction de l'élément de blocage (7) dans la section de blocage (10) à l'encontre d'un mouvement dans la position de libération, **caractérisés en ce que** le boulon de verrouillage (5) présente une rainure longitudinale (11), **en ce que** la section de blocage (10) est réalisée avec une profondeur de blocage correspondant dans tous les cas à une profondeur de rainure de la rainure longitudinale (11) et **en ce que** la section de blocage (10) est réalisée dans la direction circonférentielle en disposition adjacente à la rainure longitudinale (11), dans le cas d'un passage direct d'un fond de rainure (16) à la section de blocage (10).

2. Boulon de verrouillage et logement de boulon selon le préambule de la revendication ou selon la revendication 1, **caractérisés en ce que** le boulon de verrouillage (5) présente une rainure longitudinale (11) et **en ce que** la section de blocage (10) est réalisée en forme de gradins de façon décalée par rapport à un fond de rainure (16).

3. Boulon de verrouillage et logement de boulon selon l'une des revendications précédentes, **caractérisés en ce que** l'élément de blocage (7) est déplaçable en s'opposant à la force d'un ressort.

4. Boulon de verrouillage et logement de boulon selon l'une des revendications 1 à 3, **caractérisés en ce que** la section de blocage (10) est réalisée avec un plan incliné (22) pour le déplacement de l'élément de blocage (7) dans une position de libération d'élément de blocage.

5. Boulon de verrouillage et logement de boulon selon la revendication 4, **caractérisés en ce que** le plan incliné (22) est réalisé dans la direction circonférentielle et/ou axiale du boulon de verrouillage (5).

6. Boulon de verrouillage et logement de boulon selon la revendication 5, **caractérisés en ce que** le plan incliné (22) fait saillie dans la direction circonférentielle dans une section de retrait (21).

7. Boulon de verrouillage et logement de boulon selon la revendication 6, **caractérisés en ce que** la section de retrait (21) est disposée dans la direction circonférentielle, en ce qui concerne la rainure longitudinale (11), en sens inverse par rapport à la section de blocage (10).

8. Boulon de verrouillage et logement de boulon selon la revendication 6 ou 7, **caractérisés en ce que** la section de retrait (21) est réalisée dans la direction longitudinale de la rainure, de façon partiellement recouvrante par rapport à la zone d'extrémité de la rainure longitudinale associée.

9. Boulon de verrouillage et logement de boulon selon l'une des revendications 1 à 8, **caractérisés en ce que** le boulon de verrouillage (5) est précontraint par un ressort dans sa position d'ouverture.

10. Boulon de verrouillage et logement de boulon selon la revendication 9, **caractérisés en ce que** le boulon de verrouillage (5) est précontraint par rotation, avec une force de rotation dans la direction de la section de blocage (10).

11. Boulon de verrouillage et logement de boulon selon l'une des revendications 1 à 10, **caractérisés en ce qu'**un déplacement (flèche a) dans la direction de la position de verrouillage est d'abord nécessaire pour le déplacement du boulon de verrouillage (5) de la position de verrouillage vers la position de libération.

12. Boulon de verrouillage et logement de boulon selon l'une des revendications 1 à 11, **caractérisés en ce que** l'élément de blocage (7) est séparé de la rainure longitudinale (11) dans la position de verrouillage dans la direction circonférentielle par un ergot de verrouillage (19).

13. Boulon de verrouillage et logement de boulon selon l'une des revendications 1 à 12, **caractérisés en ce que** la section de blocage (10) présente un enfoncement d'encliquetage (24) réalisé dans la direction longitudinale de la rainure longitudinale (11) et qui dépasse dans la direction circonférentielle dans la section de blocage (10) décalée vers l'avant par rapport à l'enfoncement d'encliquetage (24) dans la direction de verrouillage (flèche a) du boulon de verrouillage (5).

14. Boulon de verrouillage et logement de boulon selon l'une des revendications 4 à 13, **caractérisés en ce que** le plan incliné (22), entoure, le cas échéant avec la section de retrait (21), l'enfoncement d'encliquetage (24).

15. Boulon de verrouillage et logement de boulon selon l'une des revendications 6 à 14, **caractérisés en ce que** la section de retrait (21) est dans tous les cas surélevée en forme de gradins dans la zone de passage vers la rainure longitudinale (11).
